# EUROPEAN PATENT SPECIFICATION

(11) **EP 4 242 979 B1**
(45) Date of publication and mention of the grant of the patent: **22.04.2026**
(21) Application number: 23152011.5
(22) Date of filing: 17.01.2023
(51) Int. Cl.: G06V 10/25

(54) **OBJECT RECOGNITION METHOD AND OBJECT RECOGNITION DEVICE**
OBJEKTERKENNUNGSVERFAHREN UND OBJEKTERKENNUNGSVORRICHTUNG
PROCÉDÉ ET DISPOSITIF DE RECONNAISSANCE D'OBJET

(30) Priority: 09.03.2022 US 202263317970 P; 22.12.2022 TW 111149348
(43) Date of publication of application: 13.09.2023
(73) Proprietor: Moxa Inc., New Taipei City 242 (TW)
(72) Inventor: CHEN, Yi-Wen, 242 New Taipei City (TW); LIU, Hsiang-Fu, 242 New Taipei City (TW); SUN, Po-Yen, 242 New Taipei City (TW); WANG, Jheng-Yu, 242 New Taipei City (TW)
(74) Representative: Kurig, Thomas

(56) References cited:
- CN-A- 105 699 381
- CN-A- 109 658 397

## Description

### BACKGROUND

### Technical Field

The disclosure relates to an image recognition technology, and in particular to an object recognition method and an object recognition device.

### Description of Related Art

In the prior art, computer vision and deep learning applications related to real scenes often have to deal with images having complex backgrounds, such as images of tracks under trains, or images of the surrounding environment of cars. For such images, it is not easy to quickly and accurately recognize the desired target object. In particular, when some edge computing platforms with limited computing power need to recognize images having complex backgrounds, they often encounter the problem of the computing time being too long, which is unsuitable for practical applications.
CN 109 658 397 A discloses a track inspection method and system, including: obtaining image information and position information of a train track; intercepting an image of a region of interest from said image information; inputting said image of the region of interest into a deep learning network; sending said image of the region of interest and said position information to a server and a vehicle terminal monitoring device when said image of the region of interest is identified as an abnormality, and realising track inspection.

### SUMMARY

The present invention is defined in the appended claims. The following disclosure serves a better understanding of the present invention. In view of this, the disclosure provides an object recognition method and an object recognition device, which may be used to solve the above technical problems.

An embodiment of the disclosure provides an object recognition method according to claim 1, suitable for an object recognition device, which is provided hereafter. A reference image and a first edge detection image of the reference image are obtained, and the reference image includes at least one target object. A first coordinate component is determined based on the first edge detection image. At least one sub-image area in the reference image is determined according to the first coordinate component. A second edge detection image of each sub-image area is obtained. A second coordinate component is determined based on the second edge detection image of each sub-image area. A specific image area in the reference image is determined based on the first coordinate component and the second coordinate component. At least one target object in the specific image area is recognized.

An embodiment of the disclosure provides an object recognition device according to claim 12, which includes a storage circuit and a processor. The storage circuit stores a program code. The processor is coupled to the storage circuit and accesses the program code to: obtain a reference image and a first edge detection image of the reference image, in which the reference image includes at least one target object; determine a first coordinate component based on the first edge detection image; determine at least one sub-image area in the reference image according to the first coordinate component; obtain a second edge detection image of each sub-image area; determine a second coordinate component based on the second edge detection image of each sub-image area; determine a specific image area in the reference image based on the first coordinate component and the second coordinate component; and recognize at least one target object in the specific image area.

### BRIEF DESCRIPTION OF THE DRAWINGS

FIG. 1 is a schematic diagram of an object recognition device according to an embodiment of the disclosure.
FIG. 2 is a flow diagram of an object recognition method according to an embodiment of the disclosure.
FIG. 3A is a schematic diagram of obtaining the reference image and the corresponding first edge detection image according to a first embodiment of the disclosure.
FIG. 3B is a schematic diagram of determining the first coordinate component based on the first edge detection image according to FIG. 3A.
FIG. 3C is a schematic diagram of finding the consecutive first candidate pixel groups from the first pixel groups according to FIG. 3B.
FIG. 4A is a schematic diagram of determining the sub-image area and the corresponding second edge detection image according to FIG. 3A.
FIG. 4B is a schematic diagram of determining the second coordinate component according to FIG. 4A.
FIG. 4C is a schematic diagram of finding the consecutive second candidate pixel groups from the second pixel groups according to FIG. 4B.
FIG. 5A is a schematic diagram of determining the specific image area in the reference image according to FIG. 3A.
FIG. 5B is a schematic diagram of recognizeing the state of the target object according to FIG. 5A.
FIG. 5C is a schematic diagram of determining the tightness of the target object according to FIG. 5B.
FIG. 6A and FIG. 6B are application scenario diagrams of determining the first coordinate component according to a second embodiment of the disclosure.
FIG. 7A and FIG. 7B are application scenario diagrams of determining the second coordinate component according to FIG. 6A.

### DETAILED DESCRIPTION OF DISCLOSED EMBODIMENTS

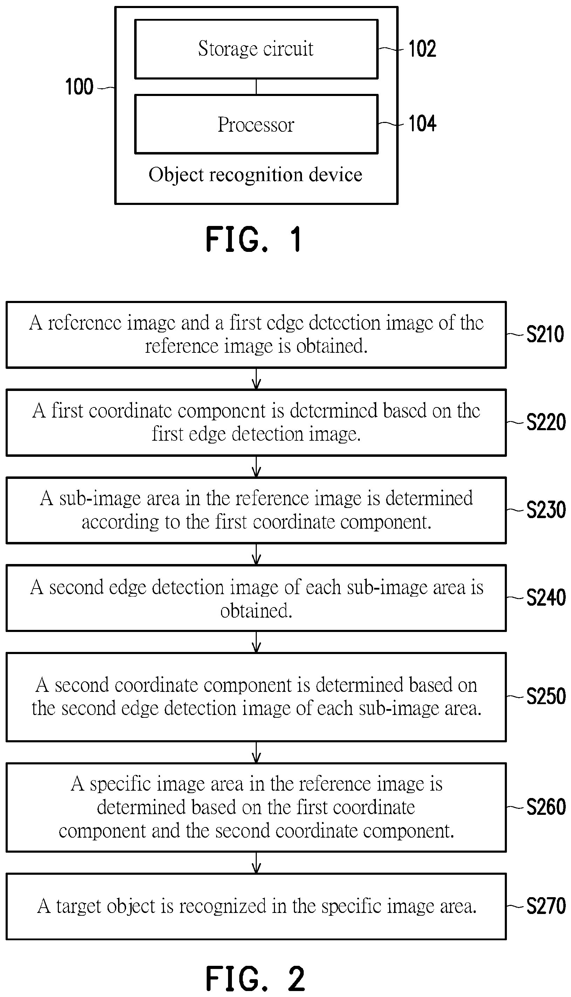

Please refer to FIG. 1. FIG. 1 is a schematic diagram of an object recognition device according to an embodiment of the disclosure. In different embodiments, an object recognition device 100 is, for example, various smart devices and/or computer devices, but is not limited thereto. In FIG. 1, the object recognition device 100 includes a storage circuit 102 and a processor 104.

The storage circuit 102 is, for example, any type of fixed or removable random access memory (RAM), read-only memory (ROM), flash memory, hard disc or other similar device, or a combination of these devices may be used to record multiple program codes or modules.

The processor 104 is coupled to the storage circuit 102 and may be a general purpose processor, a special purpose processor, a conventional processor, a digital signal processor, multiple microprocessors, one or more microprocessors combined with a digital signal processor core, a controller, a microcontroller, an application specific integrated circuit (ASIC), a field programmable gate array circuits (FPGA), any other kinds of integrated circuits, a state machine, an advanced RISC machine (ARM)-based processor, and the like.

In the embodiment of the disclosure, the processor 104 may access the modules and program codes recorded in the storage circuit 102 to implement the object recognition method provided by the disclosure, and the details thereof are described below.

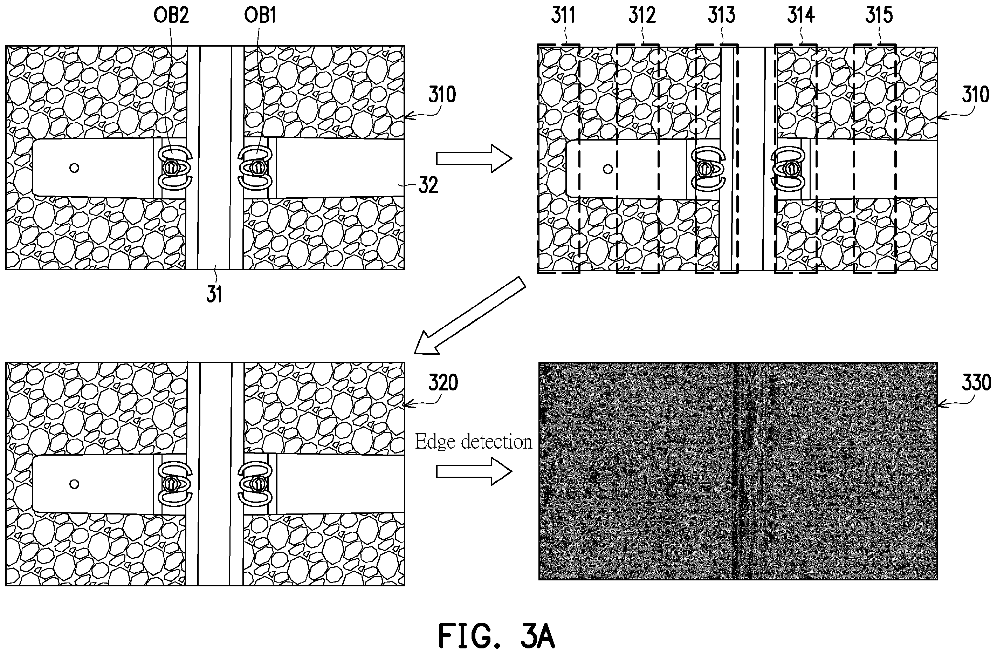

Please refer to FIG. 2. FIG. 2 is a flow diagram of an object recognition method according to an embodiment of the disclosure. The method of the embodiment may be executed by the object recognition device 100 in FIG. 1, and the details of each step in FIG. 2 are described below with the components shown in FIG. 1. In addition, in order to make the concept of the disclosure easier to understand, an example of FIG. 3A is used for illustration below. FIG. 3A is a schematic diagram of obtaining the reference image and the corresponding first edge detection image according to a first embodiment of the disclosure.

First, in step S210, the processor 104 obtains a reference image 320 and a first edge detection image 330 of the reference image 320, and the reference image 320 includes target objects OB1 and OB2.

In an embodiment, the processor 104 may generate/obtain the reference image 320 by performing a relevant image normalization operation on an original image 310 after obtaining the original image 310 including the target objects OB1 and OB2, but is not limited thereto.

In FIG. 3A, the original image 310 may be obtained by one or more cameras installed at the bottom of the train (moving) capturing a track 31 and/or a sleeper 32. The train is, for example, a rail-type vehicle (such as a rapid transit train and/or a train) commonly used to carry passengers, but is not limited thereto. In addition, in the embodiment of the disclosure, the target objects OB1 and OB2 are, for example, screw fasteners for locking the track 31 to the sleeper 32, but are not limited thereto. In addition, in the first embodiment, the original image 310 may also include road ballast.

After obtaining the original image 310, the processor 104 may determine multiple preset image areas 311 to 315 in the original image 310. In the scenario of FIG. 3A, the sum of the preset image areas 311 to 315 may be equal to half of the original image 310, but is not limited thereto. In addition, the individual positions, sizes, or shapes of the preset image areas 311 to 315 may also be adjusted by the designer according to requirements, and are not limited to the states as shown in FIG. 3A.

In FIG. 3A, the original image 310 may include multiple pixels, and in the process of performing the image normalization operation, the processor 104 may estimate the grayscale variance of the pixels in the preset image areas 311 to 315, and convert the original convert the original image 310 into the reference image 320 by dividing the grayscale value of each pixel in the original image 310 by the grayscale variance, but it is not limited thereto.

In an embodiment, the processor 104 may also directly use the obtained original image 310 as the reference image 320, but it is not limited thereto.

After obtaining the reference image 320, the processor 104 may use any conventional image edge detection algorithm to perform edge detection on the reference image 320 so as to obtain the corresponding first edge detection image 330.

Next, in step S220, the processor 104 determines a first coordinate component (hereinafter referred to as CP1) based on the first edge detection image 330.

In the first embodiment, the first coordinate component CP1 may be assumed to be the X coordinate of a certain point (such as a central point) on the track 31 in the reference image 320, but is not limited thereto. Based on this, the processor 104 may first determine the image area corresponding to the track 31 in the reference image 320 based on the first edge detection image 330, and then determine the first coordinate component CP1 accordingly, but is not limited thereto.

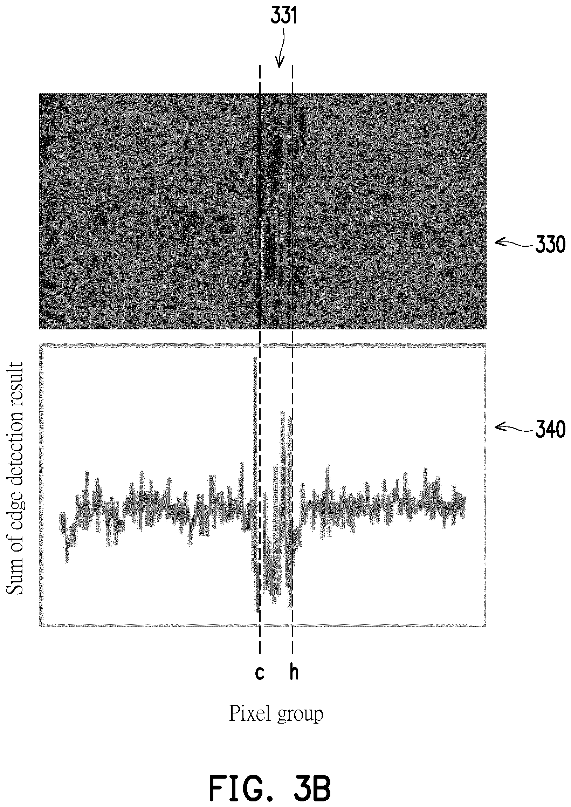

Please refer to FIG. 3B. FIG. 3B is a schematic diagram of determining the first coordinate component based on the first edge detection image according to FIG. 3A.

In the first embodiment, the processor 104 may divide the first edge detection image 330 into multiple first pixel groups according to the first direction, and estimate the statistical value of the edge detection result corresponding to each first pixel group. In the embodiment of the disclosure, the considered statistical value of the edge detection result is, for example, the average and/or sum of the edge detection result, but is not limited thereto.

In different embodiments, the processor 104 may determine the first direction based on a specific mechanism, and details thereof are described afterwards. In the scenario of FIG. 3B, the first direction is assumed to be vertical, and the multiple first pixel groups obtained by the processor 104 are, for example, pixel columns in the first edge detection image 330. In this case, the i^{th} first pixel group among the multiple first pixel groups includes, for example, pixels in the i^{th} pixel column in the first edge detection image 330, where i is an index value.

Based on this, the statistical value of the edge detection result corresponding to the i^{th} first pixel group is, for example, the statistical value of the edge detection result of the i^{th} pixel column in the first edge detection image 330.

In FIG. 3B, the statistical values of the individual edge detection results of the multiple first pixel groups (i.e., the pixel columns in the first edge detection image 330) may be shown as a graph 340.

Afterwards, the processor 104 may find multiple consecutive first candidate pixel groups from the first pixel groups based on the statistical values of the edge detection results corresponding to each first pixel group. In the first embodiment, the multiple first candidate pixel groups may be understood as a part of the first pixel group corresponding to the track 31.

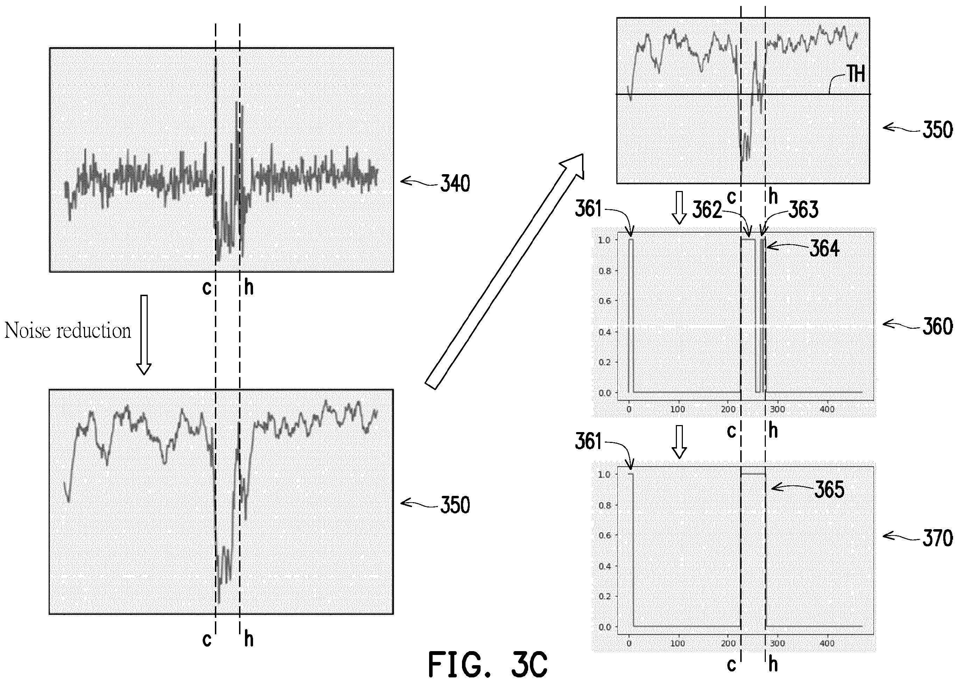

It may be seen from FIG. 3B that there is an image area 331 corresponding to the track 31 in the first edge detection image 330, and the processor 104 may find a part corresponding to the image area 331 from the multiple first pixel groups as the multiple first candidate pixel groups. Relevant details are described later with reference to FIG. 3C.

After finding the multiple first candidate pixel groups, the processor 104 may find a first specific pixel group among the multiple first candidate pixel groups, and use the coordinate component corresponding to the first specific pixel group as the first coordinate component CP1.

In FIG. 3B, assuming that the multiple first candidate pixel groups found includes the c^{th} first pixel group to the h^{th} first pixel group (c, h are positive integers), the processor 104 may use one of the c^{th} first pixel group to the h^{th} first pixel group as the first specific pixel group. For example, assuming that the first coordinate component CP1 needs to be determined according to the center point of the track 31, the processor 104 may take the (c+h)/2^{th} first pixel group as the first specific pixel group, and use the coordinate component corresponding to the first specific pixel group as the first coordinate component CP1.

In the first embodiment, since the c^{th} first pixel group includes the pixels in the c^{th} pixel column in the first edge detection image 330, the X coordinates of each pixel in the c^{th} first pixel group should all be c. Similarly, the X coordinate of each pixel in the h^{th} first pixel group should be h, and the X coordinate of each pixel in the (c+h)/2^{th} first pixel group should be (c+h)/2.

Based on this, when the first specific pixel group is assumed to be the (c+h)/2^{th} first pixel group, the processor 104 may use (c+h)/2 as the first coordinate component CP1, but is not limited thereto. In other embodiments, assuming that the first coordinate component CP1 needs to be determined according to other points on the track 31, those skilled in the art should be able to make corresponding adjustments according to the above teachings, and the details thereof are not repeated here.

Please refer to FIG. 3C. FIG. 3C is a schematic diagram of finding the consecutive first candidate pixel groups from the first pixel groups according to FIG. 3B.

In FIG. 3C, the processor 104 may first perform noise reduction processing on the graph 340 to obtain a graph 350. In an embodiment, the processor 104 may perform noise reduction processing on the graph 340 based on the concept of moving average, but is not limited thereto.

Afterwards, the processor 104 may find multiple pixel group sets 361 to 364 in the multiple first pixel groups, each pixel group set includes at least one of the multiple first pixel groups, and the statistical value of the edge detection result of each first pixel group in each pixel group set satisfies the preset condition.

In the first embodiment, since the reference image 320 includes many ballast, the track 31 corresponds to a relatively flat image area in the reference image 320. In this case, the distribution of the edge detection result in the image area 331 is relatively sparse. In other words, the track 31 in graph 350 corresponds to the first pixel group having a lower statistical value of the edge detection result.

Based on this, if the processor 104 determines that the statistical value of the edge detection result of a certain first pixel group is smaller than a preset threshold TH, the processor 104 may determine that the first pixel group satisfies the preset condition.

In FIG. 3C, the processor 104 may take a specific percentile (such as the 15^{th} percentile) of the distribution of the edge detection result in the graph 350 as the preset threshold TH, and determine the pixel group sets 361 to 364 as shown in a graph 360 accordingly. The statistical values of the edge detection results of the first pixel groups in the pixel group sets 361 to 364 are all smaller than the preset threshold TH, but are not limited thereto.

Afterwards, the processor 104 may obtain the pixel distance between the pixel group sets 361 to 364, and merge a part of the pixel group sets 361 to 364 accordingly.

In FIG. 3C, it is assumed that the pixel group set 361 includes the a^{th} first pixel group to the b^{th} first pixel group, the pixel group set 362 includes the c^{th} first pixel group to the d^{th} first pixel group, the pixel group set 363 includes the e^{th} first pixel group to the f^{th} first pixel group, and the pixel group set 364 includes the g^{th} first pixel group to the h^{th} first pixel group.

Based on this, the pixel distance between the pixel group sets 361 and 362 is, for example, (c-b), the pixel distance between the pixel group sets 362 and 363 is, for example, (e-d), and the pixel distance between the pixel group sets 363 and 364 is, for example, (g-f), but not limited thereto.

Afterwards, the processor 104 may combine the two of the pixel group sets 361 to 364 having the lower pixel distance. For example, since the pixel distance between any two of the pixel group sets 362 to 364 is relatively close, the processor 104 may merge the pixel group sets 362 to 364 into a pixel group set 365 as shown in a graph 370 (which includes, for example, the c^{th} first pixel group to the h^{th} first pixel group).

In addition, since there is a larger pixel distance between the pixel group set 361 and the other pixel groups, the pixel group set 361 is not merged with the other pixel groups.

Afterwards, the processor 104 may obtain the number of pixel groups of the first pixel group in each of the pixel group sets 361 and 365, and find out a specific pixel group set in the pixel group sets 361 and 365 accordingly.

In the first embodiment, the processor 104 may find the one with the highest number of pixel groups from the pixel group sets 361 and 365 as the specific pixel group set. Afterwards, the processor 104 may use the first pixel group included in the specific pixel group set as the first candidate pixel group.

In FIG. 3C, since the pixel group set 365 includes more first pixel groups, the processor 104 may determine that the pixel group set 365 is the specific pixel group set. In this case, the processor 104 may use the c^{th} first pixel group to the h^{th} first pixel group included in the pixel group set 365 as the first candidate pixel group, and determine the first coordinate component CP1 according to the previous teaching.

Please refer to FIG. 2 again. After determining the first coordinate component CP1, the processor 104 executes step S230 to determine the sub-image area in the reference image 320 according to the first coordinate component CP1. Afterwards, in step S240, the processor 104 obtains the second edge detection image of each sub-image area.

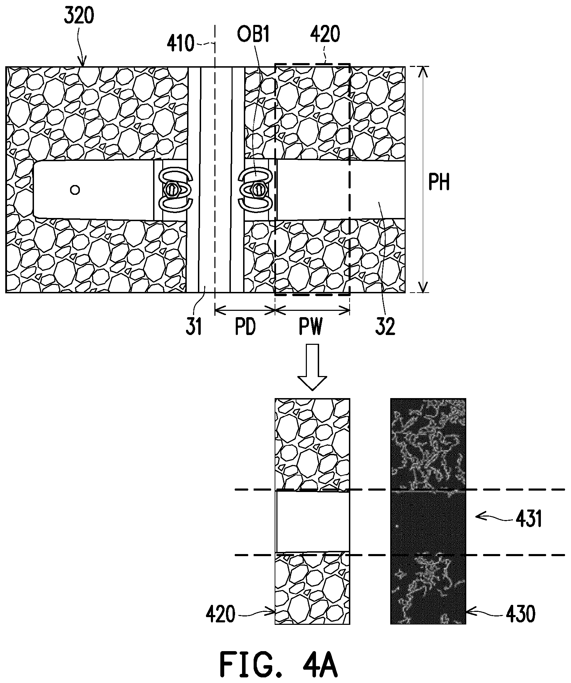

Please refer to FIG. 4A. FIG. 4A is a schematic diagram of determining the sub-image area and the corresponding second edge detection image according to FIG. 3A.

In FIG. 4A, the processor 104 may determine a reference line 410 in the reference image 320 based on the first coordinate component CP1. In embodiment, the reference line 410 may include one or more pixels whose X coordinates correspond to the first coordinate component CP1. In the previous embodiment, since the first coordinate component CP1 is assumed to correspond to the center point of the track 31, the reference line 410 determined by the processor 104 is, for example, the center line of the track 31, but is not limited thereto.

Afterwards, the processor 104 may determine a sub-image area 420 on the first designated side (such as the right side) of the reference line 410. The sub-image area 420 and the reference line 410 are separated by a preset distance PD, and the sub-image area 420 has a preset height PH and a preset width PW.

In the scenario of FIG. 4A, the sub-image area 420 is, for example, an image area that needs to include the sleeper 32. Since the relative positions between the track 31, the sleeper 32, and the target objects OB1 and OB2 are roughly fixed, the preset distance PD, the preset height PH, and the preset width PW may be set according to the relative positions, but are not limited thereto.

In FIG. 4A, the preset distance PD may be set to be larger than the sum of the width of the target object OB1 and half of the width of the track 31, so as to avoid affecting the subsequent recognition due to the appearance of the target object OB1 in the sub-image area 420, but is not limited thereto.

After determining the sub-image area 420, the processor 104 may perform edge detection on the sub-image area 420 to obtain a second edge detection image 430.

After obtaining the second edge detection image 430, the processor 104 executes step S250 to determine a second coordinate component (hereinafter referred to as CP2) based on the second edge detection image of each sub-image area.

In the first embodiment, the second coordinate component CP2 may be assumed to be the Y coordinate of a certain point (such as a central point) on the sleeper 32 in the reference image 320 (or the sub-image area 420), but is not limited thereto.

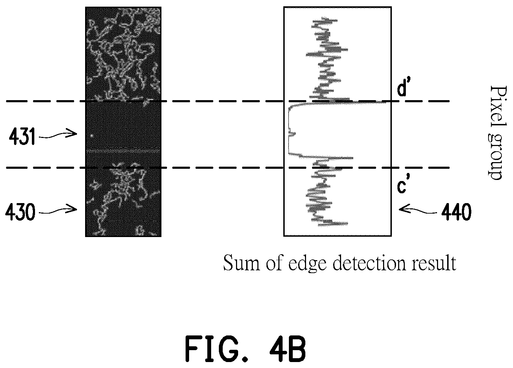

Please refer to FIG. 4B. FIG. 4B is a schematic diagram of determining the second coordinate component according to FIG. 4A. In FIG. 4B, the processor 104 may divide the second edge detection image 430 of the sub-image area 420 into multiple second pixel groups according to the second direction, and estimate the statistical value of the edge detection result corresponding to each second pixel group.

In different embodiments, the processor 104 may determine the second direction based on a specific mechanism, and details thereof are described afterwards. In the scenario of FIG. 4B, the second direction is assumed to be horizontal, and the multiple second pixel groups obtained by the processor 104 are, for example, pixel rows in the second edge detection image 430. In this case, the j^{th} second pixel group among the multiple second pixel groups includes, for example, the pixels in the j^{th} pixel row in the second edge detection image 430, where j is an index value.

Based on this, the statistical value of the edge detection result corresponding to the j^{th} second pixel group is, for example, the statistical value of the edge detection result of the j^{th} pixel row in the second edge detection image 430.

In FIG. 4B, the statistical values of the individual edge detection results of the multiple second pixel groups (i.e., pixel columns in the second edge detection image 430) may be shown as a graph 440.

Afterwards, the processor 104 may find multiple consecutive second candidate pixel groups from the second pixel groups based on the statistical values of the edge detection results corresponding to each second pixel group. In the first embodiment, the multiple second candidate pixel groups may be understood as a part of the second pixel group corresponding to the sleeper 32.

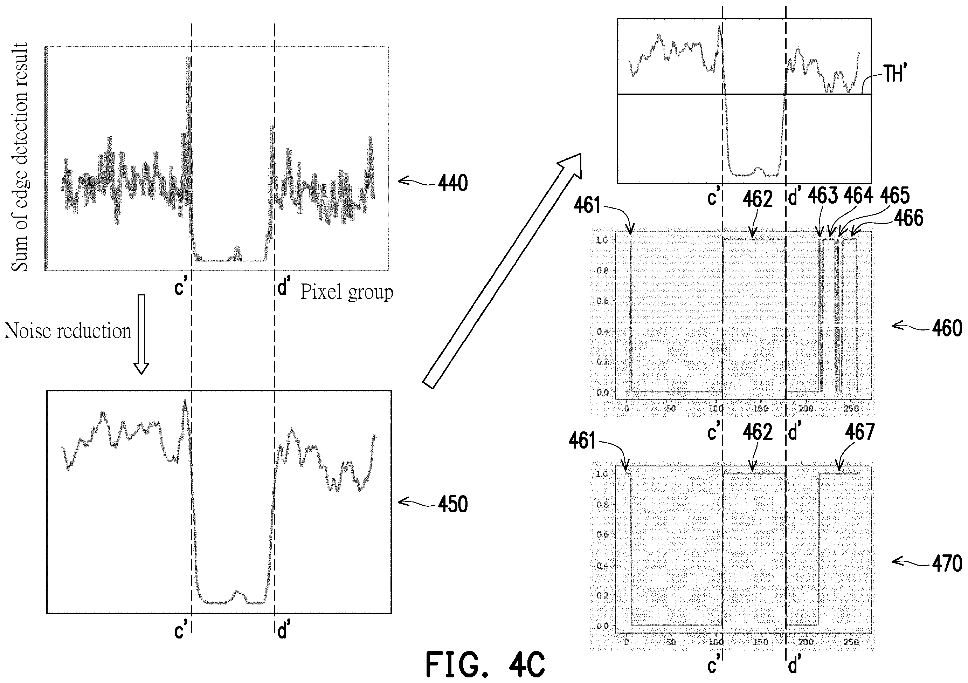

It may be seen from FIG. 4B that there is an image area 431 corresponding to the sleeper 32 in the second edge detection image 430, and the processor 104 may find a part corresponding to the image area 431 from the multiple second pixel groups as the multiple second candidate pixel groups. Relevant details are described later with reference to FIG. 4C.

After finding the multiple second candidate pixel groups, the processor 104 may find a second specific pixel group among the multiple second candidate pixel groups, and use the coordinate component corresponding to the second specific pixel group as the second coordinate component CP2.

In FIG. 4B, it is assumed that the multiple second candidate pixel groups found includes the c'^{th} second pixel group to the d'^{th} second pixel group (c' and d' are positive integers), the processor 104 may use one of the c'th second pixel group to the d'th second pixel group as the second specific pixel group. For example, assuming that the second coordinate component CP2 needs to be determined according to the center point of the sleeper 32, the processor 104 may take the (c'+d')/2^{th} second pixel group as the second specific pixel group, and use the coordinate component corresponding to the second specific pixel group as the second coordinate component CP2.

In the first embodiment, since the c'^{th} second pixel group includes the pixels in the c'^{th} pixel row in the second edge detection image 430, the Y coordinate of each pixel in the c'^{th} second pixel group should be c'. Similarly, the Y coordinate of each pixel in the d'^{th} second pixel group should be d', and the Y coordinate of each pixel in the (c'+d')/2^{th} second pixel group should be (c'+d')/2.

Based on this, when the second specific pixel group is assumed to be the (c'+d')/2^{th} second pixel group, the processor 104 may use (c'+d')/2 as the second coordinate component CP2, but is not limited thereto. In other embodiments, assuming that the second coordinate component CP2 needs to be determined according to other points on the sleeper 32, those skilled in the art should be able to make corresponding adjustments according to the above teachings, and the details thereof are not repeated here.

Please refer to FIG. 4C. FIG. 4C is a schematic diagram of finding the consecutive second candidate pixel groups from the second pixel groups according to FIG. 4B.

In FIG. 4C, the processor 104 may first perform noise reduction processing on the graph 440 to obtain a graph 450. In an embodiment, the processor 104 may perform noise reduction processing (and noise reduction processing in subsequent embodiments) on the graph 440 based on the concept of moving average, but is not limited thereto.

Afterwards, the processor 104 may find multiple pixel group sets 461 to 466 in the multiple second pixel groups. Each pixel group set includes at least one of the multiple second pixel groups, and the statistical value of the edge detection result of each second pixel group in each pixel group set satisfies the preset condition.

In the first embodiment, since the sub-image area 420 includes many ballast, the sleeper 32 corresponds to a relatively flat image area in the sub-image area 420. In this case, the distribution of the edge detection result in the image area 431 is relatively sparse. In other words, the sleeper 32 in the graph 450 corresponds to the second pixel group having a lower statistical value of the edge detection result.

Based on this, if the processor 104 determines that the statistical value of the edge detection result of a certain second pixel group is smaller than a preset threshold TH', the processor 104 may determine that the second pixel group satisfies the preset condition.

In FIG. 4C, the processor 104 may take a specific percentile (such as the 15th percentile) of the distribution of the edge detection result in the graph 450 as the preset threshold TH', and determine the pixel group sets 461 to 466 as shown in a graph 460 accordingly. The statistical values of the edge detection results of the second pixel groups in the pixel group sets 461 to 466 are all smaller than the preset threshold TH', but are not limited thereto.

Afterwards, the processor 104 may obtain the pixel distance between the pixel group sets 461 to 466, and merge a part of the pixel group sets 461 to 466 accordingly. For the method of determining the pixel distance, references may be made to the related description of FIG. 3C and are not repeated here.

Afterwards, the processor 104 may combine the two of the pixel group sets 461 to 466 having the lower pixel distance. For example, since the pixel distance between any two of the pixel group sets 463 to 466 is relatively close, the processor 104 may merge the pixel group sets 463 to 466 into a pixel group set 467 as shown in a graph 470.

In addition, since there is a larger pixel distance between the pixel group sets 461 and 462 and the other pixel groups, the pixel group sets 461 and 462 are not merged with the other pixel groups.

Afterwards, the processor 104 may obtain the number of pixel groups of the second pixel group in each of the pixel group sets 461, 462, and 467, and find out a specific pixel group set in the pixel group sets 461, 462, and 467 accordingly.

In the first embodiment, the processor 104 may find the one with the highest number of pixel groups from the pixel group sets 461, 462, and 467 as the specific pixel group set. Afterwards, the processor 104 may use the second pixel group included in the specific pixel group set as the second candidate pixel group.

In FIG. 4C, since the pixel group set 462 includes more second pixel groups, the processor 104 may determine that the pixel group set 462 is the specific pixel group set. In this case, the processor 104 may use the c'^{th} second pixel group to the d'^{th} second pixel group included in the pixel group set 462 as the second candidate pixel group, and determine the second coordinate component CP2 according to the previous teaching.

Afterwards, in step S260, the processor 104 determines a specific image area in the reference image 320 based on the first coordinate component CP1 and the second coordinate component CP2.

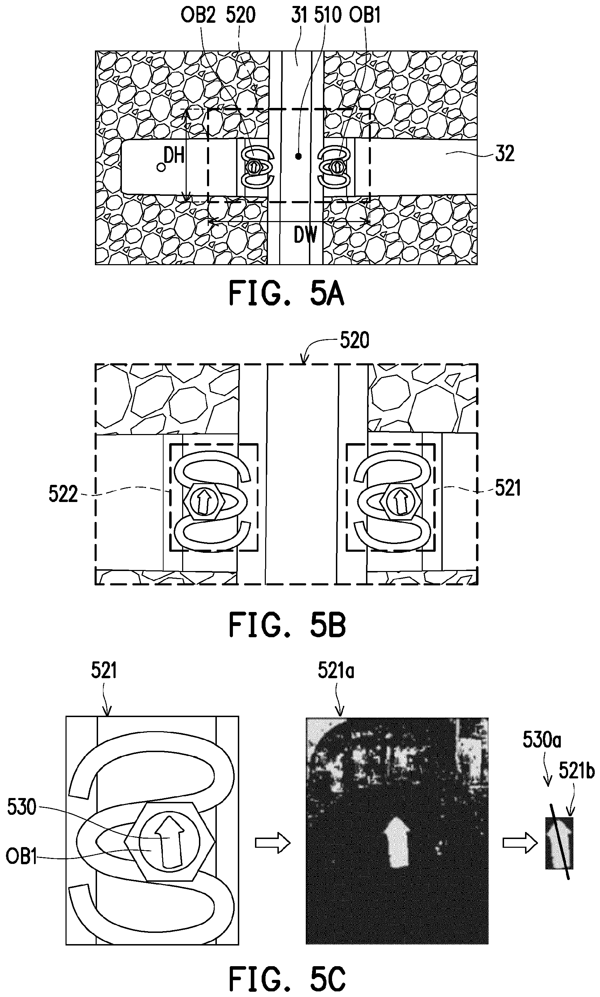

Please refer to FIG. 5A. FIG. 5A is a schematic diagram of determining the specific image area in the reference image according to FIG. 3A. In FIG. 5A, the processor 104 may determine a reference point 510 in the reference image 320 based on the first coordinate component CP1 and the second coordinate component CP2. The coordinates of the reference point 510 in the reference image 320 are, for example, (CP1, CP2), but are not limited thereto.

Afterwards, the processor 104 may include the image area of the reference point 510 as a specific image area 520. The specific image area has a designated height DH and a designated width DW. As mentioned earlier, since the relative positions between the track 31, the sleeper 32, and the target objects OB1 and OB2 are roughly fixed, the designated height DH and designated width DW may be set according to the relative positions, so that the specific image area 520 may cover the target objects OB1 and OB2. In FIG. 5A, the reference point 510 may be located at the center point of the specific image area 520, but is not limited thereto.

Afterwards, in step S270, the processor 104 recognizes the target objects OB1 and OB2 in the specific image area 520.

In an embodiment, the processor 104 may feed the specific image area 520 into a pre-trained machine learning model (such as a deep learning model), so that the machine learning model may recognize the object image areas corresponding to the target objects OB1 and OB2 from the specific image area 520.

In an embodiment, in order to enable the machine learning model to have the above capabilities, during the training process of the machine learning model, the designer may feed specially designed training data into the machine learning model, so that the machine learning model may learn accordingly. For example, after obtaining an image marked with a target object (such as a fastener), the processor 104 may convert the image into a corresponding feature vector to feed into a machine learning model. In this way, the machine learning model may learn relevant features about the target object from the feature vector. In this case, when the machine learning model receives the feature vector corresponding to an image in the future, the machine learning model may correspondingly determine whether the image includes the object image area corresponding to the target object, but is not limited thereto.

In the first embodiment, after obtaining the object image areas corresponding to the target objects OB1 and OB2, the processor 104 may further recognize the states of the target objects OB1 and OB2.

Please refer to FIG. 5B. FIG. 5B is a schematic diagram of recognizeing the state of the target object according to FIG. 5A. In FIG. 5B, the processor 104 may obtain object image areas 521 and 522 respectively corresponding to the target objects OB1 and OB2 from the specific image area 520. Afterwards, the processor 104 may respectively determine the tightness of the target objects OB1 and OB2 based on the object image areas 521 and 522.

Please refer to FIG. 5C. FIG. 5C is a schematic diagram of determining the tightness of the target object according to FIG. 5B. It may be seen from the object image area 521 as shown in FIG. 5C that the target object OB1 is marked with a reference pattern 530 (such as an arrow). In embodiment, the processor 104 may recognize the degree of deviation of the reference pattern 530 from the designated direction based on the object image area 521, and determine the tightness of the target object OB1 (i.e., the fastener) accordingly.

For example, assuming that the tightness of the target object OB1 is appropriate, the axial direction of the reference pattern 530 (such as the direction indicated by the arrow) should be approximately parallel to the axial direction of the track 31. In this case, the processor 104 may set the axial direction of the track 31 as the designated direction, and determine the degree of deviation of the reference pattern 530 relative to the designated direction accordingly.

In FIG. 5C, the processor 104 may obtain an object image area 521a by performing image processing such as binarization and noise filtering on the object image area 521, and find an object image area 521b corresponding to reference pattern 530 from the object image area 521a. Afterwards, the processor 104 may recognize an axis 530a of the reference pattern 530 by using relevant image recognition technology, and determine the degree of deviation of the axis 530a relative to the designated direction accordingly. In the embodiment of the disclosure, the greater is the degree of the deviation, the poorer is the tightness of the target object OB1, but it is not limited thereto.

In addition, the processor 104 may also determine the tightness of the target object OB2 based on the object image area 522 based on the above teaching, and the details thereof are not repeated here.

From another point of view, the method provided by the disclosure may also be understood as finding the part corresponding to the track 31 in the reference image 320 and determining the part corresponding to the sleeper 32 accordingly, when the specific relative positions between the track 31, the sleeper 32, and the target objects OB1 and OB2 are known. Afterwards, the disclosure determines the specific image area 520 that is more likely to include the target objects OB1 and OB2 based on the positions of the track 31 and the sleeper 32.

Thus, even if the obtained original image 310 and/or reference image 320 are images having relatively complex backgrounds, the method of the embodiment of the disclosure may still achieve the effect of recognizing the target objects OB1 and OB2 quickly and accurately. Moreover, since the method of the embodiment of the disclosure only needs a small amount of computing resources to complete the recognition, the heat energy generated during the recognition process is also relatively small. Based on this, the method of the embodiment of the disclosure is applicable to the scenario having a relatively low heat dissipation mechanism.

In addition, since the method of the embodiment of the disclosure does not need to consume a large amount of computing resources, it may be implemented only with a general CPU, and does not need to set a dedicated image recognition unit (GPU) for relevant recognition. Thus, the implementation cost may be further reduced.

In addition, in the prior art, it is generally checked by manpower or track inspection vehicles whether the rails are firmly locked on the sleepers by the fasteners.

However, in addition to consuming a lot of manpower and time, human inspection has a low inspection frequency, and may only be carried out during the time when no vehicles are driving. In addition, track inspection vehicles are not only expensive, but also need to be arranged at a time when no vehicles are driving.

In order to precisely check the status of the track, the track inspection vehicle usually needs to drive at a low speed, so a single track requires a lot of inspection time, which in turn leads to a relatively low inspection frequency for each rail.

However, the method of the embodiment of the disclosure may directly recognize the tightness of the fasteners based on the track images captured during the train driving, thus effectively improving the efficiency of track inspection and saving labor costs.

Although the above first embodiment is described by taking the original image 310 and/or the reference image 320 extracted from numerous ballast road sections as an example, the disclosure is also applicable to the original image and/or the reference image that does not include numerous ballast road sections.. The following are descriptions with reference to a second embodiment.

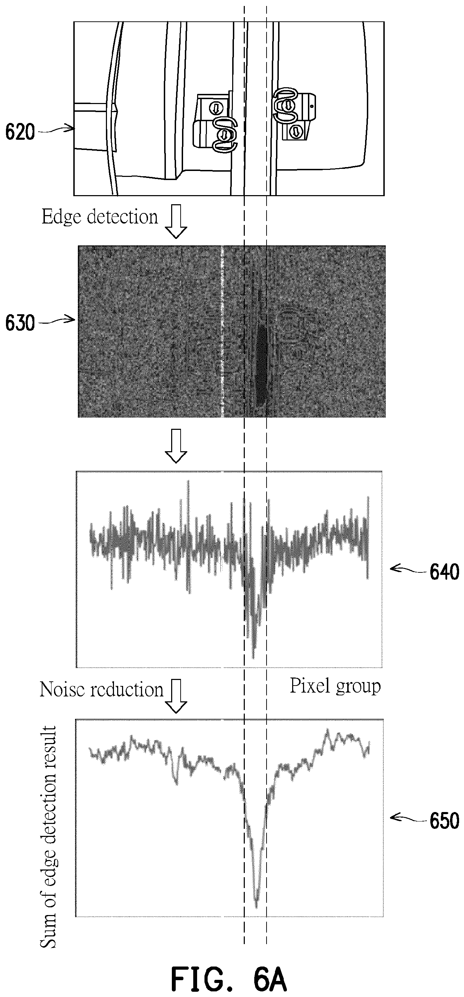

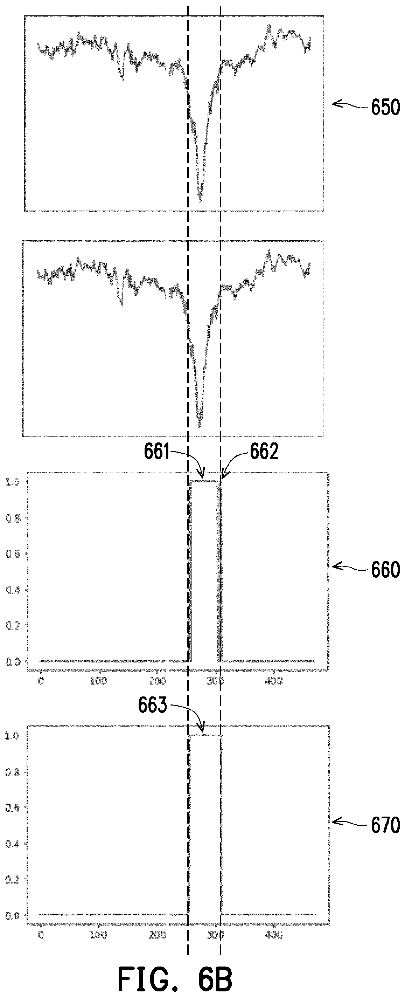

Please refer to FIG. 6A and FIG. 6B. FIG. 6A and FIG. 6B are application scenario diagrams of determining the first coordinate component according to a second embodiment of the disclosure. In FIG. 6A, after obtaining a reference image 620 (which is obtained, for example, by performing image normalization on an original image), the processor 104 may perform edge detection on the reference image 620 to obtain a first edge detection image 630.

Afterwards, the processor 104 may analyze/process the first edge detection image 630 according to the relevant description of FIG. 3B to obtain a graph 640, and perform noise reduction processing on the graph 640 to obtain a graph 650.

Next, the processor 104 may determine pixel group sets 661 and 662 as shown in a graph 660 of FIG. 6B according to the relevant description of FIG. 3C, and merge the pixel group sets 661 and 662 into a pixel group set 663 as shown in a graph 670.

In FIG. 6B, since the pixel group set 663 is the only pixel group set, the processor 104 may determine the first pixel group included in the pixel group set 663 as the first candidate pixel group, and determine the corresponding first coordinate component CP1 according to the relevant teaching of FIG. 3B.

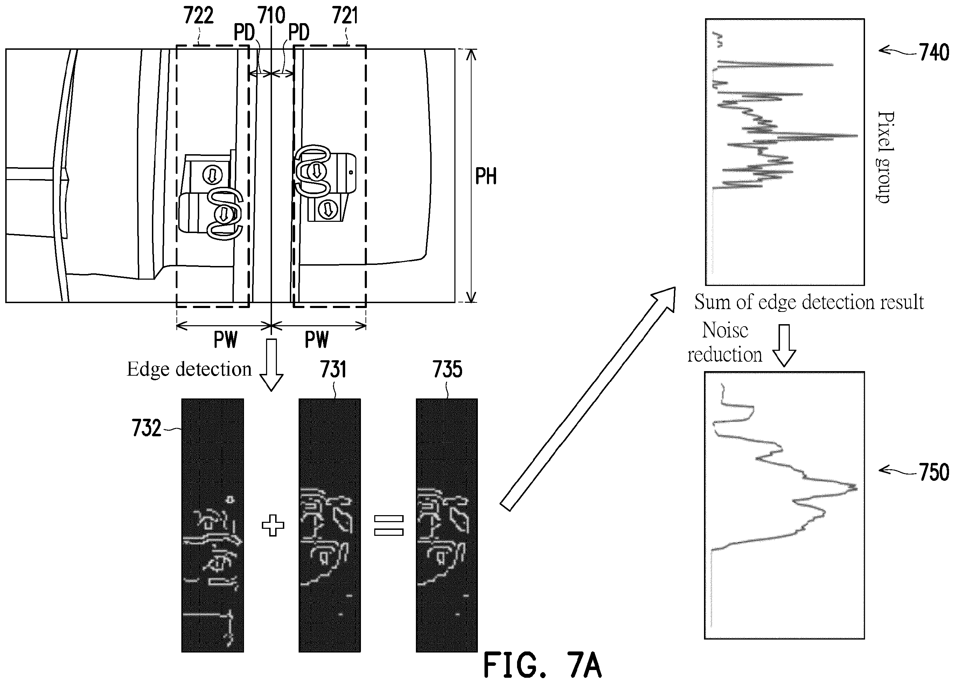

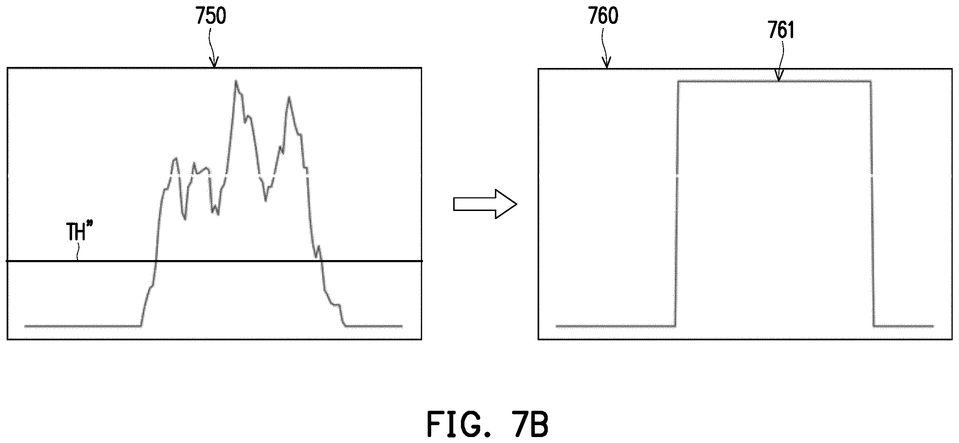

Please refer to FIG. 7A and FIG. 7B. FIG. 7A and FIG. 7B are application scenario diagrams of determining the second coordinate component according to FIG. 6A. In FIG. 7A, the processor 104 may determine a reference line 710 according to the first coordinate component CP1, and determine sub-image areas 721 and 722 on the first designated side (such as the right side) and the second designated side (such as the left side) of the reference line 710, respectively. Each of the sub-image areas 721 and 722 and the reference line 710 are separated by the preset distance PD, and the sub-image areas 721 and 722 each have the preset height PH and a preset width PW. In embodiment, for determining the reference line 710 according to the first coordinate component CP1, references may be made to the relevant description of FIG. 4A, and the details are not be repeated here.

Afterwards, the processor 104 may respectively perform edge detection on the sub-image areas 721 and 722 to obtain corresponding second edge detection images 731 and 732. In the second embodiment, the processor 104 may combine the second edge detection images 731 and 732 into a specific edge detection image 735.

Next, the processor 104 may divide the specific edge detection image 735 into the multiple second pixel groups according to the second direction (such as a horizontal direction), and estimate the statistical value of the edge detection result corresponding to each second pixel group as shown in a graph 740.

Afterwards, the processor 104 may perform noise reduction processing on the graph 740 to obtain a graph 750.

Next, the processor 104 may determine a pixel group set 761 as shown in a graph 760 of FIG. 7B according to the relevant description of FIG. 4C.

In the second embodiment, since the backgrounds of the sub-image areas 721 and 722 are relatively uncomplicated, the sleeper 32 corresponds to a relatively uneven image area in the sub-image areas 721 and 722. In this case, the distribution of the edge detection result of the sleeper 32 in the specific edge detection image 735 is relatively dense. In other words, the sleeper 32 in the graph 750 corresponds to the second pixel group having a higher statistical value of the edge detection result.

Based on this, if the processor 104 determines that the statistical value of the edge detection result of a second pixel group is smaller than a preset threshold TH", the processor 104 may determine that the second pixel group satisfies the preset condition.

In FIG. 7B, the processor 104 may take a specific percentile (such as the 85^{th} percentile) of the distribution of the edge detection result in the graph 750 as the preset threshold TH", and determine the pixel group set 761 as shown in graph 760 accordingly. The statistical values of the edge detection results of the second pixel groups in the pixel group set 761 are all smaller than the preset threshold TH", but are not limited thereto.

In FIG. 7B, since the pixel group set 761 is the only pixel group set, the processor 104 may determine the second pixel group included in the pixel group set 661 as the second candidate pixel group, and determine the corresponding second coordinate component CP2 according to the relevant teaching of FIG. 4B.

After obtaining the first coordinate component CP1 and the second coordinate component CP2 in the second embodiment, the processor 104 may determine the specific image area including the target object in the reference image 620 according to the relevant description taught in FIG. 5A to FIG. 5C, and perform operations such as recognizing the target object and determining the state of the target object (such as tightness). References to the relevant details may be made to the descriptions in the previous embodiments and are not repeated here.

As mentioned above, the embodiment of the disclosure may determine the first direction through a specific mechanism. For example, in the scenario of FIG. 3B, the processor 104 may first determine multiple candidate directions. In an embodiment, each of the multiple candidate directions may be represented by a corresponding degree. For example, the processor 104 may select several angles from an angle range of 0 to 180 degrees as the multiple candidate directions according to the designer's requirements. The candidate direction corresponding to 0 degrees is, for example, the horizontal direction, and the candidate direction corresponding to 90 degrees is, for example, the vertical direction. Based on this, those skilled in the art should be able to understand the states of the candidate directions corresponding to other angles, but are not limited thereto.

After determining the above candidate directions, the processor 104 may divide the first edge detection image 330 into multiple reference pixel groups according to the k^{th} candidate direction, and estimate the statistical value of the edge detection result corresponding to each reference pixel group, where k is an index value. Afterwards, the processor 104 may determine the variance of the statistical value of the edge detection result corresponding to each of the multiple reference pixel groups as the reference indicator corresponding to the k^{th} candidate direction.

For example, in the scenario of FIG. 3B, assuming that the considered k^{th} candidate direction corresponds to the vertical direction, the reference pixel group obtained by the processor 104 may be understood as the previously mentioned first pixel group, and the corresponding statistical value of the edge detection result may be shown in the graph 340.

Next, the processor 104 may determine the variance of the statistical value of the edge detection result corresponding to each of the multiple first pixel groups (i.e., reference pixel groups) in FIG. 3B as the reference indicator corresponding to the k^{th} candidate direction (such as a vertical direction).

For other candidate directions, the processor 104 may determine the corresponding reference indicator based on a similar principle, and select the first direction from the multiple candidate directions accordingly. For example, the first direction selected by the processor 104 is, for example, the one having the lowest reference indicator among the multiple candidate directions, but is not limited thereto.

In addition, the embodiment of the disclosure may select the second direction based on a mechanism similar to the mechanism for selecting the first direction. Taking the scenario in FIG. 4B as an example, the processor 104 may divide the second edge detection image 430 into the multiple reference pixel groups according to the k^{th} candidate direction among the multiple candidate directions, and estimate the statistical value of the edge detection result corresponding to each reference pixel group, where k is an index value. Afterwards, the processor 104 may determine the variance of the statistical value of the edge detection result corresponding to each of the multiple reference pixel groups as the reference indicator corresponding to the k^{th} candidate direction.

For example, in the scenario of FIG. 4B, assuming that the considered k^{th} candidate direction corresponds to the horizontal direction, the reference pixel group obtained by the processor 104 may be understood as the previously mentioned second pixel group, and the corresponding statistical value of the edge detection result may be shown in the graph 440.

Next, the processor 104 may determine the variance of the statistical value of the edge detection result corresponding to each of the multiple second pixel groups (i.e., reference pixel groups) in FIG. 4B as the reference indicator corresponding to the k^{th} candidate direction (such as a horizontal direction).

For other candidate directions, the processor 104 may determine the corresponding reference indicator based on a similar principle, and select the second direction from the multiple candidate directions accordingly. For example, the second direction selected by the processor 104 is, for example, the one having the lowest reference indicator among the multiple candidate directions, but is not limited thereto.

In addition, in the second embodiment (the example corresponds to the scenario without ballast), since the second edge detection image of each sub-image area needs to be combined into the specific edge detection image for subsequent analysis, the mechanism for selecting the second direction may also be adjusted accordingly.

Taking FIG. 7A as an example, after combining the second edge detection images 731 and 732 into the specific edge detection image 735, the processor 104 may divide the specific edge detection image 735 into the multiple reference pixel groups according to the k^{th} candidate direction among the multiple candidate directions, and estimate the statistical value of the edge detection result corresponding to each reference pixel group, wherein k is an index value. Afterwards, the processor 104 may determine the variance of the statistical value of the edge detection result corresponding to each of the multiple reference pixel groups as the reference indicator corresponding to the k^{th} candidate direction.

For example, in the scenario of FIG. 7A, assuming that the considered k^{th} candidate direction corresponds to the horizontal direction, the statistical value of the edge detection result obtained by the processor 104 may be shown in the graph 740.

Next, the processor 104 may determine the variance of the statistical value of the corresponding edge detection result according to FIG. 7A as the reference indicator corresponding to the k^{th} candidate direction (such as a horizontal direction).

For other candidate directions, the processor 104 may determine the corresponding reference indicator based on a similar principle, and select the second direction from the multiple candidate directions accordingly. For example, the second direction selected by the processor 104 is, for example, the one having the lowest reference indicator among the multiple candidate directions, but is not limited thereto.

To sum up, compared with the conventional method of directly trying to recognize the target object in the entire reference image, the method provided by the embodiment of the disclosure may find the specific image area in the reference image that is more likely to contain the target object through a specific mechanism, and recognize the target object accordingly. Thus, even if the obtained reference image is an image having a relatively complex background, the method of the embodiment of the disclosure may still quickly and accurately achieve the effect of recognizing the target object. Moreover, since the method of the embodiment of the disclosure only needs a small amount of computing resources to complete the recognition, the heat energy generated during the recognition process is also relatively small. Based on this, the method of the embodiment of the disclosure is applicable to the scenario having a relatively low heat dissipation mechanism.

## Claims

1. An object recognition method, suitable for an object recognition device (100), comprising:
obtaining an image (320, 620) and a first edge detection image (330, 630) of the image (320, 620), wherein the image (320, 620) comprises at least one target object (OB1, OB2);
determining a first coordinate component based on the first edge detection image (330, 630), comprising:
dividing the first edge detection image (330, 630) into a plurality of first pixel groups arranged orthogonally to a first direction, and estimating a statistical value of an edge detection result corresponding to each first pixel group, wherein the statistical value of the edge detection result corresponding to each first pixel group is an average or a sum of edge magnitudes of each first pixel group, wherein the first direction corresponds to the lowest variance of statistical value among multiple directions belonging to an angle range;
finding a plurality of consecutive first candidate pixel groups from the first pixel groups based on a comparison between a first threshold and the statistical value of the edge detection result corresponding to each first pixel group; and
finding a first specific pixel group among the first candidate pixel groups, and using a coordinate component corresponding to the first specific pixel group as the first coordinate component;
determining at least one sub-image area (420, 721, 722) in the image (320, 620) according to the first coordinate component;
obtaining a second edge detection image (430, 731, 732) of each sub-image area (420, 721, 722);
determining a second coordinate component based on the second edge detection image (430, 731, 732) of each sub-image area (420, 721, 722), comprising:
dividing the second edge detection image (430, 731, 732) of the first sub-image area into a plurality of second pixel groups arranged orthogonally to a second direction different from the first direction among the multiple directions, and estimating a statistical value of an edge detection result corresponding to each second pixel group, wherein the statistical value of the edge detection result corresponding to each second pixel group is an average or a sum of edge magnitudes of each second pixel group;
finding a plurality of consecutive second candidate pixel groups from the second pixel groups based on a comparison between a second threshold and the statistical value of the edge detection result corresponding to each second pixel group; and
finding a second specific pixel group among the second candidate pixel groups, and using a coordinate component corresponding to the second specific pixel group as the second coordinate component;
determining a specific image area (520) in the image (320, 620) based on the first coordinate component and the second coordinate component, comprising:
determining a reference point (510) having the first coordinate component and the second coordinate component as X coordinate and Y coordinate, respectively; and
determining an image area including the reference point (510) as the specific image area (520); and
recognizing the at least one target object (OB1, OB2) in the specific image area (520), wherein the at least one sub-image area (420, 721, 722) comprises a first sub-image area, and the step of determining the at least one sub-image area (420, 721, 722) in the image (320, 620) according to the first coordinate component comprises:
determining a reference line (410, 710) in the image (320, 620) based on the first coordinate component, wherein the reference line (410, 710) comprises one or more pixels whose X coordinates correspond to the first coordinate component; and
determining the first sub-image area on a first designated side of the reference line (410, 710), wherein the first sub-image area and the reference line (410, 710) are separated by a preset distance (PD), and the first sub-image area has a preset height (PH) and a preset width (PW).

2. The method according to claim 1, wherein the step of finding out the consecutive first candidate pixel groups from the first pixel groups based on the comparison between the threshold and the statistical value of the edge detection result corresponding to each first pixel group comprises:
finding a plurality of pixel group sets (361, 362, 363, 364, 365, 461, 462, 463, 464, 465, 466, 467, 661, 662, 663) in the first pixel groups after performing a noise reduction processing on the statistical value of the edge detection result corresponding to each first pixel group, wherein each pixel group set (361, 362, 363, 364, 365, 461, 462, 463, 464, 465, 466, 467, 661, 662, 663) comprises at least one of the first pixel groups, and the statistical value of the edge detection result of each first pixel group in each pixel group set (361, 362, 363, 364, 365, 461, 462, 463, 464, 465, 466, 467, 661, 662, 663) satisfies a preset condition;
obtaining a pixel distance between the pixel group sets (361, 362, 363, 364, 365, 461, 462, 463, 464, 465, 466, 467, 661, 662, 663), and merging a part of the pixel group sets (361, 362, 363, 364, 365, 461, 462, 463, 464, 465, 466, 467, 661, 662, 663) accordingly;
obtaining a number of pixel groups of the first pixel groups in each pixel group set (361, 362, 363, 364, 365, 461, 462, 463, 464, 465, 466, 467, 661, 662, 663), and finding a specific pixel group set in the pixel group sets (361, 362, 363, 364, 365, 461, 462, 463, 464, 465, 466, 467, 661, 662, 663) accordingly; and
using the first pixel groups included in the specific pixel group set as the first candidate pixel groups.

3. The method according to claim 1, further comprising:
dividing the first edge detection image (330, 630) into a plurality of reference pixel groups according to a k^{th} candidate direction among a plurality of candidate directions, and estimating a statistical value of an edge detection result corresponding to each reference pixel group, wherein k is an index value;
determining a variance of the statistical value of the edge detection result corresponding to each reference pixel group as a reference indicator corresponding to the k^{th} candidate direction; and
selecting the first direction from the candidate directions based on the reference indicator corresponding to each candidate direction.

4. The method according to claim 1, further comprising:
dividing the second edge detection image (430, 731, 732) into a plurality of reference pixel groups according to a k^{th} candidate direction among a plurality of candidate directions, and estimating a statistical value of an edge detection result corresponding to each reference pixel group, wherein k is an index value;
determining a variance of the statistical value of the edge detection result corresponding to each reference pixel group as a reference indicator corresponding to the k^{th} candidate direction; and
selecting the second direction from the candidate directions based on the reference indicator corresponding to each candidate direction.

5. The method according to claim 1, wherein the at least one sub-image area (420, 721, 722) comprises a first sub-image area and a second sub-image area, and the step of determining the at least one sub-image area (420, 721, 722) in the image (320, 620) according to the first coordinate component comprises:
determining a reference line (410, 710) in the image (320, 620) based on the first coordinate component; and
determining the first sub-image area and the second sub-image area on a first designated side and a second designated side of the reference line (410, 710), respectively, wherein each of the first sub-image area and the second sub-image area and the reference line (410, 710) are separated by a preset distance (PD), and each of the first sub-image area and the second sub-image area has a preset height (PH) and a preset width (PW).

6. The method according to claim 1, wherein the step of determining the specific image area (520) in the image (320, 620) based on the first coordinate component and the second coordinate component comprises:
determining a reference point (510) in the image (320, 620) based on the first coordinate component and the second coordinate component, and using an image area (331, 431) comprising the reference point (510) as the specific image area (520), wherein the specific image area (520) has a designated height (DH) and a designated width (DW).

7. The method according to claim 1, wherein the at least one target object (OB1, OB2) is a first fastener, and after the step of recognizing the at least one target object (OB1, OB2) in the specific image area (520), further comprises:
obtaining a first object image area (521, 522, 521a, 521b) corresponding to the first fastener in the specific image area (520); and
determining a first tightness of the first fastener based on the first object image area (521, 522, 521a, 521b).

8. The method according to claim 7, wherein a reference pattern (530) is marked on the first fastener, and the step of recognizing the first tightness of the first fastener based on the first object image area (521, 522, 521a, 521b) comprises:
recognizing a degree of a deviation of the reference pattern (530) from a designated direction based on the first object image area (521, 522, 521a, 521b), and determining the first tightness of the first fastener accordingly.

9. The method according to claim 1, further comprising:
obtaining an original image (310) comprising the at least one target object (OB1, OB2), wherein the original image (310) comprises a plurality of pixels;
determining a plurality of preset image areas (311, 312, 313, 314, 315) in the original image (310); and
estimating a grayscale variance of the pixels in the preset image areas (311, 312, 313, 314, 315), and converting the original image (310) into the image (320, 620) by dividing a grayscale value of each pixel by the grayscale variance.

10. An object recognition device (100), comprising:
a storage circuit (102), configured to store a program code; and
a processor (104), coupled to the storage circuit (102) and accesses the program code to:
obtain a image (320, 620) and a first edge detection image (330, 630) of the image (320, 620), wherein the image (320, 620) comprises at least one target object (OB1, OB2);
determine a first coordinate component based on the first edge detection image (330, 630), comprising:
dividing the first edge detection image (330, 630) into a plurality of first pixel groups arranged orthogonally to a first direction, and estimating a statistical value of an edge detection result corresponding to each first pixel group, wherein the statistical value of the edge detection result corresponding to each first pixel group is an average or a sum of edge magnitudes of each first pixel group, wherein the first direction corresponds to the lowest variance of statistical value among multiple directions belonging to an angle range;
finding a plurality of consecutive first candidate pixel groups from the first pixel groups based on a comparison between a first threshold and the statistical value of the edge detection result corresponding to each first pixel group; and
finding a first specific pixel group among the first candidate pixel groups, and using a coordinate component corresponding to the first specific pixel group as the first coordinate component;
determine at least one sub-image area (420, 721, 722) in the image (320, 620) according to the first coordinate component;
obtain a second edge detection image (430, 731, 732) of each sub-image area (420, 721, 722);
determine a second coordinate component based on the second edge detection image (430, 731, 732) of each sub-image area (420, 721, 722), comprising:
dividing the second edge detection image (430, 731, 732) of the first sub-image area into a plurality of second pixel groups arranged orthogonally to a second direction different from the first direction among the multiple directions, and estimating a statistical value of an edge detection result corresponding to each second pixel group, wherein the statistical value of the edge detection result corresponding to each second pixel group is an average or a sum of edge magnitudes of each second pixel group;
finding a plurality of consecutive second candidate pixel groups from the second pixel groups based on a comparison between a second threshold and the statistical value of the edge detection result corresponding to each second pixel group; and
finding a second specific pixel group among the second candidate pixel groups, and using a coordinate component corresponding to the second specific pixel group as the second coordinate component;
determine a specific image area (520) in the image (320, 620) based on the first coordinate component and the second coordinate component, comprising:
determining a reference point (510) having the first coordinate component and the second coordinate component as X coordinate and Y coordinate, respectively; and
determining an image area including the reference point (510) as the specific image area (520); and
recognize the at least one target object (OB1, OB2) by performing an object recognition operation on the specific image area (520),
determining a reference line (410, 710) in the image (320, 620) based on the first coordinate component, wherein the reference line (410, 710) comprises one or more pixels whose X coordinates correspond to the first coordinate component.

## Patentansprüche

1. Objekterkennungsverfahren, geeignet für eine Objekterkennungsvorrichtung (100), umfassend:
Erhalten eines Bildes (320, 620) und eines ersten Kantendetektionsbildes (330, 630) des Bildes (320, 620), wobei das Bild (320, 620) mindestens ein Zielobjekt (OB1, OB2) umfasst;
Bestimmen einer ersten Koordinatenkomponente auf der Grundlage des ersten Kantendetektionsbildes (330, 630), umfassend:
Unterteilen des ersten Kantendetektionsbildes (330, 630) in eine Vielzahl erster Pixelgruppen, die orthogonal zu einer ersten Richtung angeordnet sind, und Schätzen eines statistischen Werts eines Kantendetektionsergebnisses, das jeder ersten Pixelgruppe entspricht, wobei der statistische Wert des Kantendetektionsergebnisses, das jeder ersten Pixelgruppe entspricht, ein Mittelwert oder eine Summe von Kantenstärken jeder ersten Pixelgruppe ist, wobei die erste Richtung der geringsten Varianz des statistischen Werts unter mehreren Richtungen entspricht, die zu einem Winkelbereich gehören;
Auffinden einer Vielzahl aufeinanderfolgender erster Kandidaten-Pixelgruppen aus den ersten Pixelgruppen auf der Grundlage eines Vergleichs zwischen einem ersten Schwellenwert und dem statistischen Wert des Kantendetektionsergebnisses, das jeder ersten Pixelgruppe entspricht; und
Auffinden einer ersten spezifischen Pixelgruppe unter den ersten Kandidaten-Pixelgruppen und Verwenden einer Koordinatenkomponente, die der ersten spezifischen Pixelgruppe entspricht, als die erste Koordinatenkomponente;
Bestimmen mindestens eines Teilbildbereichs (420, 721, 722) in dem Bild (320, 620) entsprechend der ersten Koordinatenkomponente;
Erhalten eines zweiten Kantendetektionsbildes (430, 731, 732) jedes Teilbildbereichs (420, 721, 722);
Bestimmen einer zweiten Koordinatenkomponente auf der Grundlage des zweiten Kantendetektionsbildes (430, 731, 732) jedes Teilbildbereichs (420, 721, 722), umfassend:
Unterteilen des zweiten Kantendetektionsbildes (430, 731, 732) des ersten Teilbildbereichs in eine Vielzahl zweiter Pixelgruppen, die orthogonal zu einer zweiten Richtung angeordnet sind, die sich von der ersten Richtung unter den mehreren Richtungen unterscheidet, und Schätzen eines statistischen Werts eines Kantendetektionsergebnisses, das jeder zweiten Pixelgruppe entspricht, wobei der statistische Wert des Kantendetektionsergebnisses, das jeder zweiten Pixelgruppe entspricht, ein Mittelwert oder eine Summe von Kantenstärken jeder zweiten Pixelgruppe ist;
Auffinden einer Vielzahl aufeinanderfolgender zweiter Kandidaten-Pixelgruppen aus den zweiten Pixelgruppen auf der Grundlage eines Vergleichs zwischen einem zweiten Schwellenwert und dem statistischen Wert des Kantendetektionsergebnisses, das jeder zweiten Pixelgruppe entspricht; und
Auffinden einer zweiten spezifischen Pixelgruppe unter den zweiten Kandidaten-Pixelgruppen und Verwenden einer Koordinatenkomponente, die der zweiten spezifischen Pixelgruppe entspricht, als die zweite Koordinatenkomponente;
Bestimmen eines spezifischen Bildbereichs (520) in dem Bild (320, 620) auf der Grundlage der ersten Koordinatenkomponente und der zweiten Koordinatenkomponente, umfassend:
Bestimmen eines Referenzpunkts (510), der die erste Koordinatenkomponente und die zweite Koordinatenkomponente als X-Koordinate bzw. Y-Koordinate aufweist; und
Bestimmen eines Bildbereichs, der den Referenzpunkt (510) umfasst, als den spezifischen Bildbereich (520); und
Erkennen des mindestens einen Zielobjekts (OB1, OB2) in dem spezifischen Bildbereich (520), wobei der mindestens eine Teilbildbereich (420, 721, 722) einen ersten Teilbildbereich umfasst, und der Schritt des Bestimmens des mindestens einen Teilbildbereichs (420, 721, 722) in dem Bild (320, 620) entsprechend der ersten Koordinatenkomponente Folgendes umfasst:
Bestimmen einer Referenzlinie (410, 710) in dem Bild (320, 620) auf der Grundlage der ersten Koordinatenkomponente, wobei die Referenzlinie (410, 710) ein oder mehrere Pixel umfasst, deren X-Koordinaten der ersten Koordinatenkomponente entsprechen; und
Bestimmen des ersten Teilbildbereichs auf einer ersten vorgegebenen Seite der Referenzlinie (410, 710), wobei der erste Teilbildbereich und die Referenzlinie (410, 710) durch einen vorgegebenen Abstand (PD) getrennt sind, und der erste Teilbildbereich eine vorgegebene Höhe (PH) und eine vorgegebene Breite (PW) aufweist.

2. Verfahren nach Anspruch 1, wobei der Schritt des Auffindens der aufeinanderfolgenden ersten Kandidaten-Pixelgruppen aus den ersten Pixelgruppen auf der Grundlage des Vergleichs zwischen dem Schwellenwert und dem statistischen Wert des Kantendetektionsergebnisses, das jeder ersten Pixelgruppe entspricht, umfasst:
Auffinden einer Vielzahl von Pixelgruppensätzen (361, 362, 363, 364, 365, 461, 462, 463, 464, 465, 466, 467, 661, 662, 663) in den ersten Pixelgruppen nach Durchführen einer Rauschreduktionsverarbeitung an dem statistischen Wert des Kantendetektionsergebnisses, das jeder ersten Pixelgruppe entspricht, wobei jeder Pixelgruppensatz (361, 362, 363, 364, 365, 461, 462, 463, 464, 465, 466, 467, 661, 662, 663) mindestens eine der ersten Pixelgruppen umfasst, und der statistische Wert des Kantendetektionsergebnisses jeder ersten Pixelgruppe in jedem Pixelgruppensatz (361, 362, 363, 364, 365, 461, 462, 463, 464, 465, 466, 467, 661, 662, 663) eine vorgegebene Bedingung erfüllt;
Erhalten eines Pixelabstands zwischen den Pixelgruppensätzen (361, 362, 363, 364, 365, 461, 462, 463, 464, 465, 466, 467, 661, 662, 663), und entsprechendes Zusammenführen eines Teils der Pixelgruppensätze (361, 362, 363, 364, 365, 461, 462, 463, 464, 465, 466, 467, 661, 662, 663);
Erhalten einer Anzahl von Pixelgruppen der ersten Pixelgruppen in jedem Pixelgruppensatz (361, 362, 363, 364, 365, 461, 462, 463, 464, 465, 466, 467, 661, 662, 663), und entsprechendes Auffinden eines spezifischen Pixelgruppensatzes in den Pixelgruppensätzen (361, 362, 363, 364, 365, 461, 462, 463, 464, 465, 466, 467, 661, 662, 663); und
Verwenden der ersten Pixelgruppen, die in dem spezifischen Pixelgruppensatz enthalten sind, als die ersten Kandidaten-Pixelgruppen.

3. Verfahren nach Anspruch 1, ferner umfassend:
Unterteilen des ersten Kantendetektionsbildes (330, 630) in eine Vielzahl von Referenz-Pixelgruppen entsprechend einer k-ten Kandidatenrichtung unter einer Vielzahl von Kandidatenrichtungen, und Schätzen eines statistischen Werts eines Kantendetektionsergebnisses, das jeder Referenz-Pixelgruppe entspricht, wobei k ein Indexwert ist;
Bestimmen einer Varianz des statistischen Werts des Kantendetektionsergebnisses, das jeder Referenz-Pixelgruppe entspricht, als einen der k-ten Kandidatenrichtung entsprechenden Referenzindikator; und
Auswählen der ersten Richtung aus den Kandidatenrichtungen auf der Grundlage des Referenzindikators, der jeder Kandidatenrichtung entspricht.

4. Verfahren nach Anspruch 1, ferner umfassend:
Unterteilen des zweiten Kantendetektionsbildes (430, 731, 732) in eine Vielzahl von Referenz-Pixelgruppen entsprechend einer k-ten Kandidatenrichtung unter einer Vielzahl von Kandidatenrichtungen, und Schätzen eines statistischen Werts eines Kantendetektionsergebnisses, das jeder Referenz-Pixelgruppe entspricht, wobei k ein Indexwert ist;
Bestimmen einer Varianz des statistischen Werts des Kantendetektionsergebnisses, das jeder Referenz-Pixelgruppe entspricht, als einen der k-ten Kandidatenrichtung entsprechenden Referenzindikator; und
Auswählen der zweiten Richtung aus den Kandidatenrichtungen auf der Grundlage des Referenzindikators, der jeder Kandidatenrichtung entspricht.

5. Verfahren nach Anspruch 1, wobei der mindestens eine Teilbildbereich (420, 721, 722) einen ersten Teilbildbereich und einen zweiten Teilbildbereich umfasst, und der Schritt des Bestimmens des mindestens einen Teilbildbereichs (420, 721, 722) in dem Bild (320, 620) entsprechend der ersten Koordinatenkomponente umfasst:
Bestimmen einer Referenzlinie (410, 710) in dem Bild (320, 620) auf der Grundlage der ersten Koordinatenkomponente; und
Bestimmen des ersten Teilbildbereichs und des zweiten Teilbildbereichs auf einer ersten vorgegebenen Seite bzw. einer zweiten vorgegebenen Seite der Referenzlinie (410, 710), wobei jeder von dem ersten Teilbildbereich und dem zweiten Teilbildbereich sowie die Referenzlinie (410, 710) durch einen vorgegebenen Abstand (PD) getrennt sind, und jeder von dem ersten Teilbildbereich und dem zweiten Teilbildbereich eine vorgegebene Höhe (PH) und eine vorgegebene Breite (PW) aufweist.

6. Verfahren nach Anspruch 1, wobei der Schritt des Bestimmens des spezifischen Bildbereichs (520) in dem Bild (320, 620) auf der Grundlage der ersten Koordinatenkomponente und der zweiten Koordinatenkomponente umfasst:
Bestimmen eines Referenzpunkts (510) in dem Bild (320, 620) auf der Grundlage der ersten Koordinatenkomponente und der zweiten Koordinatenkomponente, und Verwenden eines Bildbereichs (331, 431), der den Referenzpunkt (510) umfasst, als den spezifischen Bildbereich (520), wobei der spezifische Bildbereich (520) eine vorgegebene Höhe (DH) und eine vorgegebene Breite (DW) aufweist.

7. Verfahren nach Anspruch 1, wobei das mindestens eine Zielobjekt (OB1, OB2) ein erstes Befestigungselement ist, und nach dem Schritt des Erkennens des mindestens einen Zielobjekts (OB1, OB2) in dem spezifischen Bildbereich (520) ferner umfasst:
Erhalten eines ersten Objektbildbereichs (521, 522, 521a, 521b), der dem ersten Befestigungselement in dem spezifischen Bildbereich (520) entspricht; und
Bestimmen einer ersten Festigkeit des ersten Befestigungselements auf der Grundlage des ersten Objektbildbereichs (521, 522, 521a, 521b).

8. Verfahren nach Anspruch 7, wobei ein Referenzmuster (530) auf dem ersten Befestigungselement markiert ist, und der Schritt des Erkennens der ersten Festigkeit des ersten Befestigungselements auf der Grundlage des ersten Objektbildbereichs (521, 522, 521a, 521b) umfasst:
Erkennen eines Grads einer Abweichung des Referenzmusters (530) von einer vorgegebenen Richtung auf der Grundlage des ersten Objektbildbereichs (521, 522, 521a, 521b), und entsprechendes Bestimmen der ersten Festigkeit des ersten Befestigungselements.

9. Verfahren nach Anspruch 1, ferner umfassend:
Erhalten eines Originalbildes (310), das das mindestens eine Zielobjekt (OB1, OB2) umfasst, wobei das Originalbild (310) eine Vielzahl von Pixeln umfasst;
Bestimmen einer Vielzahl von vorgegebenen Bildbereichen (311, 312, 313, 314, 315) in dem Originalbild (310); und
Schätzen einer Grauwertvarianz der Pixel in den vorgegebenen Bildbereichen (311, 312, 313, 314, 315), und Umwandeln des Originalbildes (310) in das Bild (320, 620), indem ein Grauwert jedes Pixels durch die Grauwertvarianz dividiert wird.

10. Objekterkennungsvorrichtung (100), umfassend:
eine Speicherschaltung (102), die dazu konfiguriert ist, einen Programmcode zu speichern; und
einen Prozessor (104), der mit der Speicherschaltung (102) gekoppelt ist und auf den Programmcode zugreift, zum:
Erhalten eines Bildes (320, 620) und eines ersten Kantendetektionsbildes (330, 630) des Bildes (320, 620), wobei das Bild (320, 620) mindestens ein Zielobjekt (OB1, OB2) umfasst;
Bestimmen einer ersten Koordinatenkomponente auf der Grundlage des ersten Kantendetektionsbildes (330, 630), umfassend:
Unterteilen des ersten Kantendetektionsbildes (330, 630) in eine Vielzahl erster Pixelgruppen, die orthogonal zu einer ersten Richtung angeordnet sind, und Schätzen eines statistischen Werts eines Kantendetektionsergebnisses, das jeder ersten Pixelgruppe entspricht, wobei der statistische Wert des Kantendetektionsergebnisses, das jeder ersten Pixelgruppe entspricht, ein Mittelwert oder eine Summe von Kantenstärken jeder ersten Pixelgruppe ist, wobei die erste Richtung der geringsten Varianz des statistischen Werts unter mehreren Richtungen entspricht, die zu einem Winkelbereich gehören;
Auffinden einer Vielzahl aufeinanderfolgender erster Kandidaten-Pixelgruppen aus den ersten Pixelgruppen auf der Grundlage eines Vergleichs zwischen einem ersten Schwellenwert und dem statistischen Wert des Kantendetektionsergebnisses, das jeder ersten Pixelgruppe entspricht; und
Auffinden einer ersten spezifischen Pixelgruppe unter den ersten Kandidaten-Pixelgruppen und Verwenden einer Koordinatenkomponente, die der ersten spezifischen Pixelgruppe entspricht, als die erste Koordinatenkomponente;
Bestimmen mindestens eines Teilbildbereichs (420, 721, 722) in dem Bild (320, 620) entsprechend der ersten Koordinatenkomponente;
Erhalten eines zweiten Kantendetektionsbildes (430, 731, 732) jedes Teilbildbereichs (420, 721, 722);
Bestimmen einer zweiten Koordinatenkomponente auf der Grundlage des zweiten Kantendetektionsbildes (430, 731, 732) jedes Teilbildbereichs (420, 721, 722), umfassend:
Unterteilen des zweiten Kantendetektionsbildes (430, 731, 732) des ersten Teilbildbereichs in eine Vielzahl zweiter Pixelgruppen, die orthogonal zu einer zweiten Richtung angeordnet sind, die sich von der ersten Richtung unter den mehreren Richtungen unterscheidet, und Schätzen eines statistischen Werts eines Kantendetektionsergebnisses, das jeder zweiten Pixelgruppe entspricht, wobei der statistische Wert des Kantendetektionsergebnisses, das jeder zweiten Pixelgruppe entspricht, ein Mittelwert oder eine Summe von Kantenstärken jeder zweiten Pixelgruppe ist;
Auffinden einer Vielzahl aufeinanderfolgender zweiter Kandidaten-Pixelgruppen aus den zweiten Pixelgruppen auf der Grundlage eines Vergleichs zwischen einem zweiten Schwellenwert und dem statistischen Wert des Kantendetektionsergebnisses, das jeder zweiten Pixelgruppe entspricht; und
Auffinden einer zweiten spezifischen Pixelgruppe unter den zweiten Kandidaten-Pixelgruppen und Verwenden einer Koordinatenkomponente, die der zweiten spezifischen Pixelgruppe entspricht, als die zweite Koordinatenkomponente;
Bestimmen eines spezifischen Bildbereichs (520) in dem Bild (320, 620) auf der Grundlage der ersten Koordinatenkomponente und der zweiten Koordinatenkomponente, umfassend:
Bestimmen eines Referenzpunkts (510), der die erste Koordinatenkomponente und die zweite Koordinatenkomponente als X-Koordinate bzw. Y-Koordinate aufweist; und
Bestimmen eines Bildbereichs, der den Referenzpunkt (510) umfasst, als den spezifischen Bildbereich (520); und
Erkennen des mindestens einen Zielobjekts (OB1, OB2) durch Durchführen einer Objekterkennungsoperation an dem spezifischen Bildbereich (520),
Bestimmen einer Referenzlinie (410, 710) in dem Bild (320, 620) auf der Grundlage der ersten Koordinatenkomponente, wobei die Referenzlinie (410, 710) ein oder mehrere Pixel umfasst, deren X-Koordinaten der ersten Koordinatenkomponente entsprechen.

## Revendications

1. Un procédé de reconnaissance d'objet, adapté à un dispositif de reconnaissance d'objet (100), comprenant :
le fait d'obtenir une image (320, 620) et une première image (330, 630) de détection de contours de l'image (320, 620), l'image (320, 620) comprenant au moins un objet cible (OB1, OB2) ;
le fait de déterminer une première composante de coordonnée en fonction de la première image (330, 630) de détection de contours, ce qui comprend :
le fait de diviser la première image (330, 630) de détection de contours en une pluralité de premiers groupes de pixels agencés orthogonalement à une première direction, et d'estimer une valeur statistique d'un résultat de détection de contours correspondant à chaque premier groupe de pixels, la valeur statistique du résultat de détection de contours qui correspond à chaque premier groupe de pixels étant une moyenne ou une somme des amplitudes de contours de chaque premier groupe de pixels, la première direction correspondant à la variance la plus faible de la valeur statistique parmi plusieurs directions appartenant à une plage d'angles ;
le fait de trouver une pluralité de premiers groupes de pixels candidats consécutifs à partir des premiers groupes de pixels sur la base d'une comparaison entre un premier seuil et la valeur statistique du résultat de détection de contours correspondant à chaque premier groupe de pixels ; et
le fait de trouver un premier groupe de pixels spécifique parmi les premiers groupes de pixels candidats, et d'utiliser une composante de coordonnée correspondant au premier groupe de pixels spécifique en tant que première composante de coordonnée ;
le fait de déterminer au moins une sous-zone d'image (420, 721, 722) dans l'image (320, 620) en fonction de la première composante de coordonnées ;
le fait d'obtenir une deuxième image (430, 731, 732) de détection de contours de chaque sous-zone d'image (420, 721, 722) ;
le fait de déterminer une deuxième composante de coordonnées en fonction de la deuxième image (430, 731, 732) de détection de contours de chaque sous-zone d'image (420, 721, 722), ce qui comprend :
le fait de diviser la deuxième image (430, 731, 732) de détection de contours de la première sous-zone d'image en une pluralité de deuxièmes groupes de pixels agencés orthogonalement à une deuxième direction différente de la première direction parmi les multiples directions, et d'estimer une valeur statistique d'un résultat de détection de contours correspondant à chaque deuxième groupe de pixels, la valeur statistique du résultat de détection de contours correspondant à chaque deuxième groupe de pixels étant une moyenne ou une somme des amplitudes de contours de chaque deuxième groupe de pixels ;
le fait de trouver une pluralité de deuxièmes groupes de pixels candidats consécutifs à partir des deuxièmes groupes de pixels sur la base d'une comparaison entre un deuxième seuil et la valeur statistique du résultat de détection de contours correspondant à chaque deuxième groupe de pixels ; et
le fait de trouver un deuxième groupe de pixels spécifique parmi les deuxièmes groupes de pixels candidats, et d'utiliser une composante de coordonnées correspondant au deuxième groupe de pixels spécifique en tant que deuxième composante de coordonnées ;
le fait de déterminer une zone d'image spécifique (520) dans l'image (320, 620) en fonction de la première composante de coordonnées et de la deuxième composante de coordonnées, ce qui comprend :
le fait de déterminer un point de référence (510) ayant la première composante de coordonnées et la deuxième composante de coordonnées en tant que coordonnée X et coordonnée Y, respectivement ; et
le fait de déterminer une zone d'image comprenant le point de référence (510) en tant que zone d'image spécifique (520) ; et
le fait de reconnaître ledit au moins un objet cible (OB1, OB2) dans la zone d'image spécifique (520), ladite au moins une sous-zone d'image (420, 721, 722) comprenant une première sous-zone d'image, et l'étape consistant à déterminer ladite au moins une sous-zone d'image (420, 721, 722) dans l'image (320, 620) en fonction de la première composante de coordonnées comprenant :
le fait de déterminer une ligne de référence (410, 710) dans l'image (320, 620) en fonction de la première composante de coordonnée, la ligne de référence (410, 710) comprenant un ou plusieurs pixels dont les coordonnées X correspondent à la première composante de coordonnée ; et
le fait de déterminer la première zone de sous-image sur un premier côté désigné de la ligne de référence (410, 710), la première zone de sous-image et la ligne de référence (410, 710) étant séparées par une distance prédéfinie (PD), et la première zone de sous-image a une hauteur prédéfinie (PH) et une largeur prédéfinie (PW).

2. Le procédé selon la revendication 1, dans lequel l'étape consistant à trouver les premiers groupes de pixels candidats consécutifs à partir des premiers groupes de pixels sur la base de la comparaison entre le seuil et la valeur statistique du résultat de détection de contours correspondant à chaque premier groupe de pixels comprend :
le fait de trouver une pluralité d'ensembles de groupes de pixels (361, 362, 363, 364, 365, 461, 462, 463, 464, 465, 466, 467, 661, 662, 663) dans les premiers groupes de pixels après avoir effectué un traitement de réduction du bruit sur la valeur statistique du résultat de détection de contours correspondant à chaque premier groupe de pixels, chaque ensemble de groupes de pixels (361, 362, 363, 364, 365, 461, 462, 463, 464, 465, 466, 467, 661, 662, 663) comprenant au moins un des premiers groupes de pixels, et la valeur statistique du résultat de détection de contours de chaque premier groupe de pixels dans chaque ensemble de groupes de pixels (361, 362, 363, 364, 365, 461, 462, 463, 464, 465, 466, 467, 661, 662, 663) satisfait à une condition prédéfinie ;
le fait d'obtenir une distance de pixels entre les ensembles de groupes de pixels (361, 362, 363, 364, 365, 461, 462, 463, 464, 465, 466, 467, 661, 662, 663) et de fusionner une partie des ensembles de groupes de pixels (361, 362, 363, 364, 365, 461, 462, 463, 464, 465, 466, 467, 661, 662, 663) en conséquence ;
le fait d'obtenir un certain nombre de groupes de pixels des premiers groupes de pixels dans chaque ensemble de groupes de pixels (361, 362, 363, 364, 365, 461, 462, 463, 464, 465, 466, 467, 661, 662, 663) et de trouver un ensemble de groupes de pixels spécifique dans les ensembles de groupes de pixels (361, 362, 363, 364, 365, 461, 462, 463, 464, 465, 466, 467, 661, 662, 663) ; et
le fait d'utiliser les premiers groupes de pixels inclus dans le groupe de pixels spécifique en tant que premiers groupes de pixels candidats.

3. Le procédé selon la revendication 1, comprenant en outre :
le fait de diviser la première image (330, 630) de détection de contours en une pluralité de groupes de pixels de référence selon une k^{ième} direction candidate parmi une pluralité de directions candidates, et d'estimer une valeur statistique d'un résultat de détection de contours correspondant à chaque groupe de pixels de référence, k étant une valeur d'indice ;
le fait de déterminer une variance de la valeur statistique du résultat de détection de contours correspondant à chaque groupe de pixels de référence en tant qu'indicateur de référence correspondant à la k^{ième} direction candidate ; et
le fait de sélectionner la première direction parmi les directions candidates en fonction de l'indicateur de référence correspondant à chaque direction candidate.

4. Le procédé selon la revendication 1, comprenant en outre :
le fait de diviser la deuxième image (430, 731, 732) de détection de contours en une pluralité de groupes de pixels de référence selon une k^{ième} direction candidate parmi une pluralité de directions candidates, et d'estimer une valeur statistique d'un résultat de détection de contours correspondant à chaque groupe de pixels de référence, k étant une valeur d'indice ;
le fait de déterminer une variance de la valeur statistique du résultat de détection de contours correspondant à chaque groupe de pixels de référence en tant qu'indicateur de référence correspondant à la k^{ième} direction candidate ; et
le fait de sélectionner la deuxième direction parmi les directions candidates en fonction de l'indicateur de référence correspondant à chaque direction candidate.

5. Le procédé selon la revendication 1, dans lequel ladite au moins une sous-zone d'image (420, 721, 722) comprend une première sous-zone d'image et une deuxième sous-zone d'image, et l'étape consistant à déterminer ladite au moins une sous-zone d'image (420, 721, 722) dans l'image (320, 620) en fonction de la première composante de coordonnées comprend :
le fait de déterminer une ligne de référence (410, 710) dans l'image (320, 620) en fonction de la première composante de coordonnées ; et
le fait de déterminer la première sous-zone d'image et la deuxième sous-zone d'image sur un premier côté désigné et un deuxième côté désigné de la ligne de référence (410, 710), respectivement, chacune parmi la première sous-zone d'image et la deuxième sous-zone d'image et la ligne de référence (410, 710) étant séparées par une distance prédéfinie (PD), et chacune parmi la première sous-zone d'image et la deuxième sous-zone d'image ayant une hauteur prédéfinie (PH) et une largeur prédéfinie (PW).

6. Le procédé selon la revendication 1, dans lequel l'étape consistant à déterminer la zone d'image spécifique (520) dans l'image (320, 620) en fonction de la première composante de coordonnées et de la deuxième composante de coordonnées comprend :
le fait de déterminer un point de référence (510) dans l'image (320, 620) en fonction de la première composante de coordonnée et de la deuxième composante de coordonnée, et d'utiliser une zone d'image (331, 431) comprenant le point de référence (510) en tant que la zone d'image spécifique (520), la zone d'image spécifique (520) ayant une hauteur désignée (DH) et une largeur désignée (DW).

7. Le procédé selon la revendication 1, dans lequel ledit au moins un objet cible (OB1, OB2) est un premier organe de fixation, et, après l'étape de reconnaissance dudit au moins un objet cible (OB1, OB2) dans la zone d'image spécifique (520), comprend en outre :
le fait d'obtenir une première zone d'image d'objet (521, 522, 521a, 521b) correspondant au premier organe de fixation dans la zone d'image spécifique (520) ; et
le fait de déterminer un premier serrage du premier organe de fixation en fonction de la première zone d'image d'objet (521, 522, 521a, 521b).

8. Le procédé selon la revendication 7, dans lequel un motif de référence (530) est marqué sur le premier organe de fixation, et l'étape consistant à reconnaître le premier serrage du premier organe de fixation en fonction de la première zone d'image d'objet (521, 522, 521a, 521b) comprend :
le fait de reconnaître un degré de déviation du motif de référence (530) par rapport à une direction désignée en fonction de la première zone d'image d'objet (521, 522, 521a, 521b), et de déterminer le premier serrage du premier organe de fixation en conséquence.

9. Le procédé selon la revendication 1, comprenant en outre :
le fait d'obtenir une image d'origine (310) comprenant au moins un objet cible (OB1, OB2), l'image d'origine (310) comprenant une pluralité de pixels ;
le fait de déterminer une pluralité de zones d'image prédéfinies (311, 312, 313, 314, 315) dans l'image d'origine (310) ; et
le fait d'estimer une variance de l'échelle de gris des pixels dans les zones d'image prédéfinies (311, 312, 313, 314, 315), et de convertir l'image d'origine (310) en l'image (320, 620) en divisant une valeur d'échelle de gris de chaque pixel par la variance de l'échelle de gris.

10. Un dispositif de reconnaissance d'objet (100), comprenant :
un circuit de stockage (102), configuré pour stocker un code de programme ; et
un processeur (104), relié au circuit de stockage (102) et accédant au code de programme pour :
obtenir une image (320, 620) et une première image (330, 630) de détection de contours de l'image (320, 620), l'image (320, 620) comprenant au moins un objet cible (OB1, OB2) ;
déterminer une première composante de coordonnée en fonction de la première image (330, 630) de détection de contours, ce qui comprend :
le fait de diviser la première image (330, 630) de détection de contours en une pluralité de premiers groupes de pixels agencés orthogonalement à une première direction, et d'estimer une valeur statistique d'un résultat de détection de contours correspondant à chaque premier groupe de pixels, la valeur statistique du résultat de détection de contours qui correspond à chaque premier groupe de pixels étant une moyenne ou une somme des amplitudes de contours de chaque premier groupe de pixels, la première direction correspondant à la variance la plus faible de la valeur statistique parmi plusieurs directions appartenant à une plage d'angles ;
le fait de trouver une pluralité de premiers groupes de pixels candidats consécutifs à partir des premiers groupes de pixels sur la base d'une comparaison entre un premier seuil et la valeur statistique du résultat de détection de contours correspondant à chaque premier groupe de pixels ; et
le fait de trouver un premier groupe de pixels spécifique parmi les premiers groupes de pixels candidats, et d'utiliser une composante de coordonnée correspondant au premier groupe de pixels spécifique en tant que première composante de coordonnée ;
déterminer au moins une sous-zone d'image (420, 721, 722) dans l'image (320, 620) en fonction de la première composante de coordonnées ;
obtenir une deuxième image (430, 731, 732) de détection de contours de chaque sous-zone d'image (420, 721, 722) ;
déterminer une deuxième composante de coordonnées en fonction de la deuxième image (430, 731, 732) de détection de contours de chaque sous-zone d'image (420, 721, 722), ce qui comprend :
le fait de diviser la deuxième image (430, 731, 732) de détection de contours de la première sous-zone d'image en une pluralité de deuxièmes groupes de pixels agencés orthogonalement à une deuxième direction différente de la première direction parmi les multiples directions, et d'estimer une valeur statistique d'un résultat de détection de contours correspondant à chaque deuxième groupe de pixels, la valeur statistique du résultat de détection de contours qui correspond à chaque deuxième groupe de pixels étant une moyenne ou une somme des amplitudes de contours de chaque deuxième groupe de pixels ;
le fait de trouver une pluralité de deuxièmes groupes de pixels candidats consécutifs à partir des deuxièmes groupes de pixels sur la base d'une comparaison entre un deuxième seuil et la valeur statistique du résultat de détection de contours correspondant à chaque deuxième groupe de pixels ; et
le fait de trouver un deuxième groupe de pixels spécifique parmi les deuxièmes groupes de pixels candidats, et d'utiliser une composante de coordonnées correspondant au deuxième groupe de pixels spécifique en tant que deuxième composante de coordonnées ;
déterminer une zone d'image spécifique (520) dans l'image (320, 620) en fonction de la première composante de coordonnées et de la deuxième composante de coordonnées, ce qui comprend :
le fait de déterminer un point de référence (510) ayant la première composante de coordonnées et la deuxième composante de coordonnées en tant que coordonnée X et coordonnée Y, respectivement ; et
le fait de déterminer une zone d'image comprenant le point de référence (510) en tant que zone d'image spécifique (520) ; et
reconnaître ledit au moins un objet cible (OB1, OB2) en effectuant une opération de reconnaissance d'objet sur la zone d'image spécifique (520),
déterminer une ligne de référence (410, 710) dans l'image (320, 620) en fonction de la première composante de coordonnée, la ligne de référence (410, 710) comprenant un ou plusieurs pixels dont les coordonnées X correspondent à la première composante de coordonnée.
